# EUROPEAN PATENT APPLICATION

(11) **EP 0 752 682 A2**
(43) Date of publication of application: **08.01.1997**
(21) Application number: 96304770.9
(22) Date of filing: 28.06.1996
(51) Int. Cl.: G06K 11/20

(54) **Control handle assembly**

(30) Priority: 29.06.1995 GB 9513296
(71) Applicant: Industrial Science & Technology Limited, Newcastle upon Tyne, NE6 1LL (GB)
(72) Inventor: Harris, James, I.S.T., Newcastle upon Tyne, NE6 1LL (GB)
(74) Representative: Jehan, Robert

(57) **Abstract**

A control handle assembly (10,110) for a rail vehicle such as a train or metro includes a driver's handle (14,114) which incorporates a Deadman's feature by which the handle (14,114) can fall to a lower position by means of gravity in the absence of a holding force applied by the operator. A rest plate (130) is provided on the handle (114) to allow the handle (114) to be kept in its operative position whilst minimising driver fatigue. An alertness check requires movement of the handle (114) to its non-operative position at periodic intervals. The handle (114) and other driver controls (116) are coupled to a control unit (12) by a magnetic sensor system (146,148) which reduces operator strain by avoiding mechanical links.

## Description

The present invention relates to a control system and control handle assembly, for use, for example, in a rail vehicle.

Rail vehicles, including main line, light rail, metrocars, trams and underground stock have associated subsystem(s) whose function is to provide traction, that is motive power to the vehicle, and control deceleration, that is braking. The majority of vehicles in service have a driver, who is responsible for the application of control to the traction and braking systems in whatever form these functions are implemented. That control is usually effected by a driver handle, the position of which determines the application of control to the traction and braking systems. It is normally a requirement that means be provided to prevent inadvertent operation or operation by unauthorised personnel by incorporation on the vehicle of an interlock requiring a key for release. Further safety measures are normally incorporated to bring the vehicle to a halt, or generate alerts or warnings, in the event of the driver becoming incapacitated (by means of what is commonly known as the Deadman's system) or to check that the driver is alert by his/her ability to respond to a stimulus generated on the vehicle (by means of what is commonly known as the Vigilance System).

The driver handle should be designed ergonomically for the avoidance of repetitive strain injuries. This has been difficult in some instances due to the constraints imposed on the handle to activate mechanical or other arrangements, to effect control, or due to space requirements for mounting the system in the driver's cab.

Typically, the driver handle is spring loaded so as to force the driver to apply pressure against the spring to actuate the vehicle drive system. In the absence of any actuating force from the driver, the system closes down to cut motive power to the vehicle and to apply the brakes. Although such a system can provide a useful check on the driver, it has been found that the force required to resist the spring can cause repetitive strain injury. This can also tempt a driver suffering fatigue to block the handle in its operating position. Of course, this defeats the purpose of the Deadman's system.

Requirements for safety render it desirable that the system be tolerant to failures and it should be difficult to defeat the measures incorporated for the Deadman's or Vigilance system.

Ergonomic problems have also been identified with certain designs of vehicle control system. The problems are associated with the operational mode of the handle and the positioning of the handle with respect to the driver's seat. The two major problems are generally the depth of the controller below the cab desk and the necessity for continuous effort to depress the Deadman's switch.

The present invention seeks to provide an improved control handle assembly and vehicle control unit.

According to an aspect of the present invention, there is provided a control handle assembly as specified in claim 1.

The handle is designed so as not to need a spring to bias it to the second position and can thus considerably reduce operator strain.

Preferably, the handle is pivotable between the first and second positions and includes a weight disposed so as to cause it to pivot to the second position in the absence of a biasing force. In practice, the force required to keep the handle in the first position can be made relatively low, for example by reducing the overall weight of the handle or by providing only a small biasing weight suitable merely to provide a greater moment towards the second position than to the first position.

In a preferred embodiment, the handle is provided with a rest member onto which an operator can rest a hand, the rest member being coupled to the handle so as to cause the handle to be in its first position when an operator's hand is resting on the rest member.

The rest member is preferably a plate extending from the handle.

The control means is preferably operative to require movement of the handle so as to retain the output in the actuating state. For a handle which can be moved between two positions, the control means is preferably operative to require temporary movement of the handle to the second position for a predetermined time period.

Advantageously, the control means is operative to set the output in an inactive state if the handle has not been moved to the second position for a predetermined time period.

The second handle position is preferably a check or an off position.

According to another aspect of the present invention, there is provided a control unit including a control handle assembly as herein specified.

The control unit preferably includes at least one movable actuator for setting a device to be controlled into one of a plurality of operating states and magnetic actuator sensing means for sensing the position of the or each actuator.

The magnetic actuator means preferably includes at least one magnet fitted to the or at least one of the movable actuators and a magnetic field sensor disposed so as to sense the or each magnet. The or each magnet is preferably a permanent magnet.

There may be provided a damping or detent mechanism for the or each actuator.

The handle is preferably provided on the or an actuator.

The control unit preferably includes processing means including three processing channels coupled to three separate actuator position sensing means coupled to the or each actuator. The processing means may be operative to generate a control output when signals from at least two of the actuator position sensing means correspond to one another.

The processing means is preferably asynchronous and/or non-sequential.

The processing means may include a communication link for coupling to a device to be controlled which is parallel, serial or a combination of the two.

According to another aspect of the present invention, there is provided a control handle assembly comprising a handle movable between at least first and second positions, control means for providing an actuating output when the handle is in the first position, and a rest member onto which an operator can rest a hand, the rest member being coupled to the handle so as to cause the handle to be in its first position when an operator's hand is resting on the rest member.

According to another aspect of the present invention, there is provided a control handle assembly comprising a handle movable between at least first and second positions, control means for providing an actuating output when the handle is in the first position and operative to require movement of the handle so as to retain the output in the actuating state.

According to another aspect of the present invention, there is provided a control unit for controlling a vehicle and including at least one movable manually operable actuator for setting a vehicle to be controlled into one of a plurality of operating states and magnetic actuator sensing means for sensing the position of the or each actuator. The operating states are preferably vehicle drive states.

According to another aspect of the present invention, there is provided a control unit for controlling a vehicle and including at least one actuator for setting a vehicle to be controlled into one of a plurality of operating states and processing means operative to determine the position of the or each actuator and to generate one or more control signals, the processing means being operative asynchronously or non-sequentially.

An embodiment of the present invention is described below, by way of example only, with reference to the accompanying drawings, in which:
Figure 1 is a schematic view of a vehicle cab including an embodiment of control system comprising a control handle assembly and a processor and power control module;
Figure 2 is a schematic view of various embodiments of control handle for the handle assembly of Figure 1;
Figure 3 is a block diagram of an embodiment of processor and power controller for the control system of Figure 1;
Figure 4A is a schematic view of an embodiment of detent system for providing controlled movement of the control handles of Figure 2;
Figure 4B is a schematic view of an embodiment of magnetic detent system for use as an alternative to the system of Figure 4A;
Figure 5 is a plan view of a preferred embodiment of control handle assembly;
Figure 6 is a transverse cross-sectional view of the control handle assembly of Figure 5;
Figure 7 is a longitudinal cross-sectional view of the control handle assembly of Figure 5; and
Figure 8 is a schematic view of an embodiment of magnetic position sensor for the handle assembly of Figure 5.

The embodiment described below relates to a control system for a rail vehicle such as a train, metro vehicle system or the like. The control system could be applied to other devices which require control.

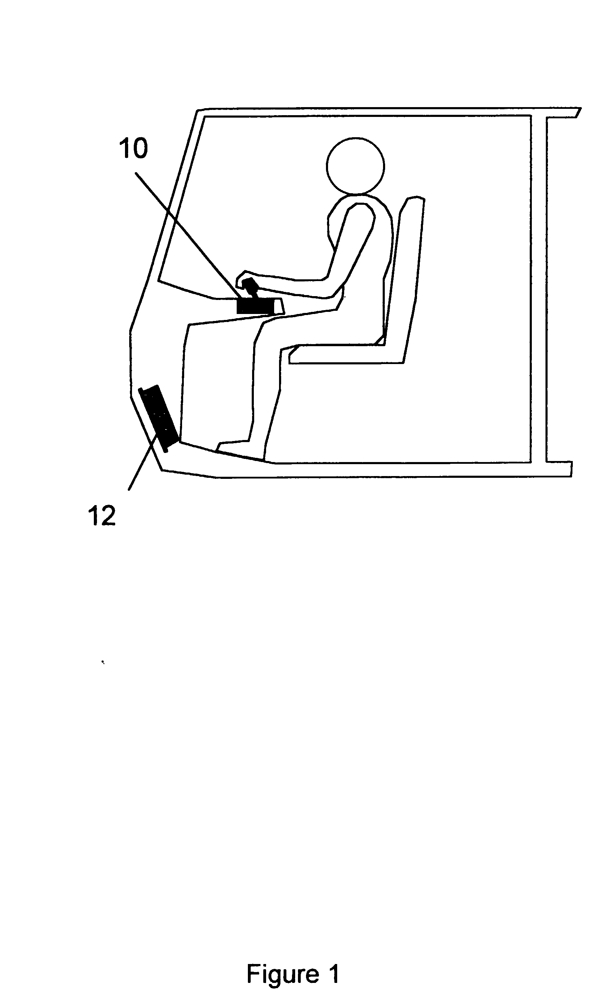

Referring to Figure 1, the control system comprises two separate units 10,12 in order to overcome possible space problems associated with the existing equipment. Figure 1 shows the general cab arrangement and the position of the two units. The unit 10 containing the operating handles, referred to hereinafter as the control handle assembly, is housed in a relatively shallow enclosure which allows it to be mounted in the optimum position without obstructing the driver's leg space. The second unit 12, which provides the electrical interface with the vehicle and referred to hereinafter as the processor and power control module, can be installed in a convenient remote location. Moreover, the separation of various parts of the control system greatly facilitates the placement of the control handle assembly within the cab, in particular to locations which are more comfortable to the driver and which can reduce fatigue and strain.

Communication between the control handle assembly 10, the controller 12 and the system being controlled may take any suitable form, such as electrical or optical, and may be parallel, serial or any combination of the two.

The control handle unit 10 is provided with one or more control handles, in dependence upon the particular application and customer requirements. The or each handle is provided with part of a position sensor which coacts with one or more other sensor parts provided in fixed positions within the assembly housing.

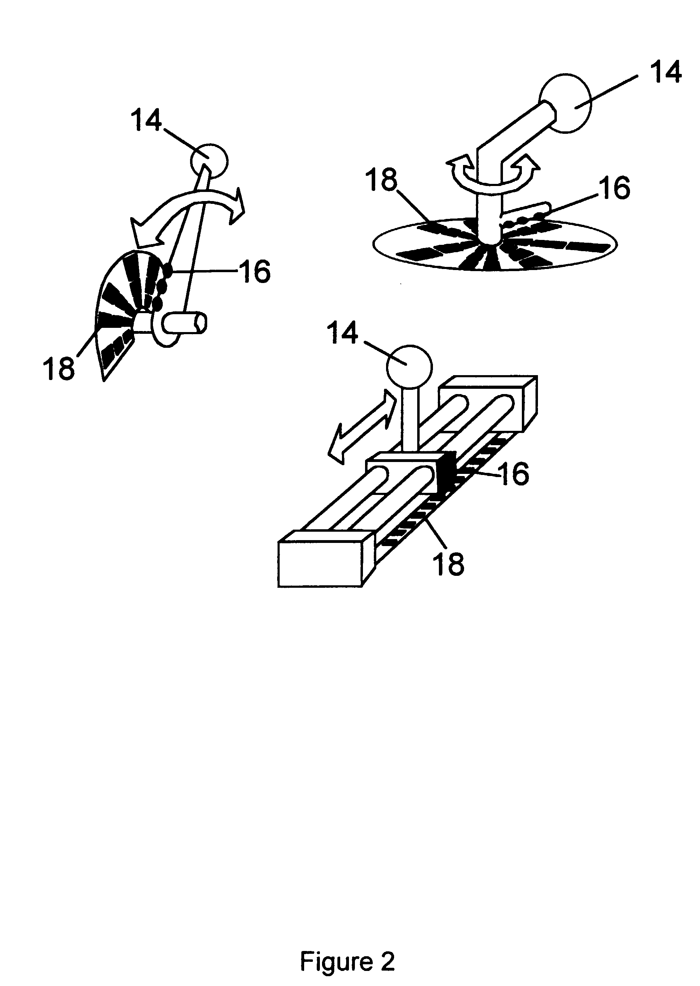

In the preferred embodiments, shown in Figure 2, the or each handle 14 is provided with at least one permanent magnet 16 which moves with the handle 14. A plurality of Hall sensors 18, preferably semiconductor devices, are provided on a support fixed to the assembly housing in an arrangement which follows the movement of the handle. Thus, as the handle 14 moves, the or each magnet 16 moves across the sensors 18 to change the signals they produce, thereby to indicate the position of the handle 14 and the control desired.

As can be seen in Figures 2A and 2C, the preferred embodiment comprises three separate magnets 16, each coacting with a respective separate series of sensors 18. Although the linearly sliding handle on figure 2B shows only one magnet and one series of sensors, it may also includes three magnets and three series of sensors as with the other examples.

It will be apparent from Figure 2 that the handle can be designed to have any suitable type of motion. Tests have shown that the linear motion of the handle of Figure 2B produces less operator fatigue.

Each magnet and series of sensors provides an independent electrical signal which is processed by an independent signal processor, either in the control handle assembly 10 or in the processor and power control module 12. This provides a triplex system in which the separate signals are compared to determine whether or not to act on the sensed commands from the handles 14. In the preferred embodiment, the system carries out a command as long as at least two of the three signals are the same.

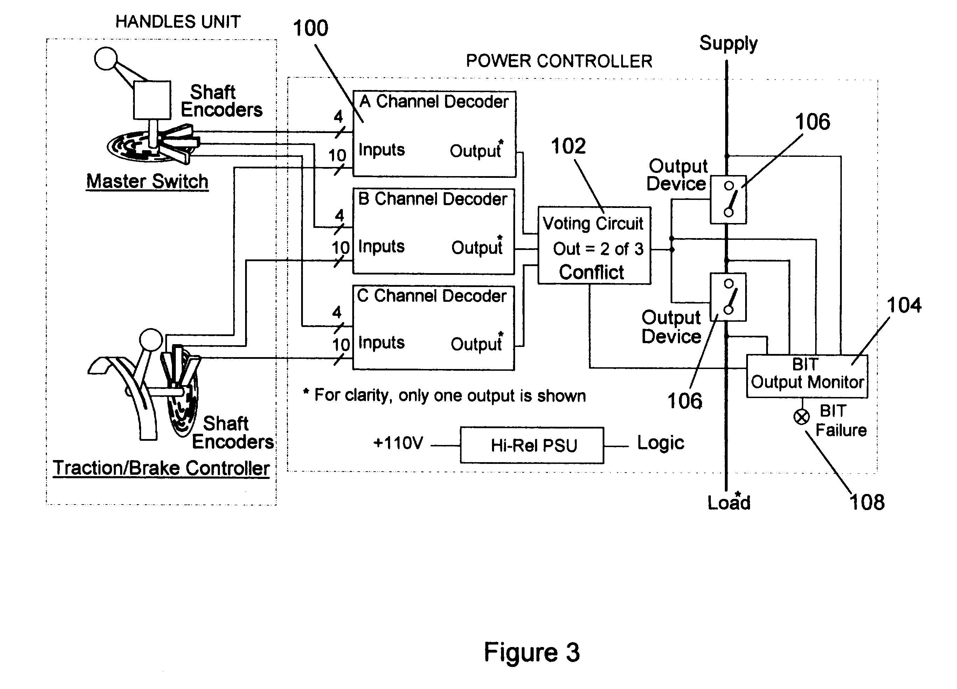

A simplified block diagram of the proposed processing and power control system is shown in Figure 3. The signals from each set of sensors 16, 18 on each handle 14 provide the input to three independent channels A, B, and C. Each channel has an independent decoder 100 which translates the signals from the sensors 18 into the appropriate power controller outputs. For clarity, the block diagram shows only one of the fourteen outputs from each decoder 100.

The decoder output from each channel is taken to a voting circuit 102. The voting circuit 102 output represents the majority vote of the input signals. Normally, all three inputs will be identical. If one channel fails, its erroneous output will be ignored. The situation must however be remedied as soon as possible to maintain the availability of the system. To indicate the failure to maintenance personnel, built-in test (BIT) circuitry 104 monitors that a conflict has occurred and latches a fault indicator.

In the preferred embodiment, as an option, the output from the voting circuit 102 is fed to two semiconductor elements 106 connected in series. Should one of the semiconductors 106 fail short circuit, the other semiconductor 106 can still control the load. If the semiconductor 106 fails open circuit the controller cannot continue to operate the load but 'fails safe' (i.e. OFF). The failure of the semiconductor 106 is detected by the BIT circuitry 104 which latches a failure lamp 108 on in order to alert maintenance personnel that attention is required.

To reduce the number of wires between the control handle assembly 10 and the processor and power controller 12, the sensor signals may be encoded into binary coded decimal (BCD) format. The additional decoding required will be performed by the decoder on each channel. By deliberately connecting the sensors 16 to different BCD decoder inputs for each channel, the output code sequences will be different for each channel thus adding diversity to the system which will help to avoid common mode failures.

Sequentially programmed devices and the need for an internal clock have been eliminated in the design as their response may be indeterminate in the event of a disruption. The system is thus preferably asynchronous.

A built-in test procedure alerts the operator or service personnel of an electronic failure in the processing channels or the control handle assembly. Internal diagnostics are incorporated which can be interrogated by PC based test equipment.

The output signals for control of the traction and braking subsystem(s) of the vehicle are effected by parallel or serial communications, or a combination of both, via electrical or optical media or both.

The use of a magnetic system, although not an immediate choice in the art because of the availability of apparently more sophisticated systems, has been found to provide a number of important advantages. The first is that the handles 14 require no physical link to the circuitry of the system. The magnets 16, can be totally separate from the remainder of the sensing circuitry, thereby enhancing reliability and providing more design options.

Another advantage is that there is no mechanical movement which must be overcome to rotate or slide the handle 14. The handle can be designed to provide virtually no resistance if this is suitable for the application in question and for the customer.

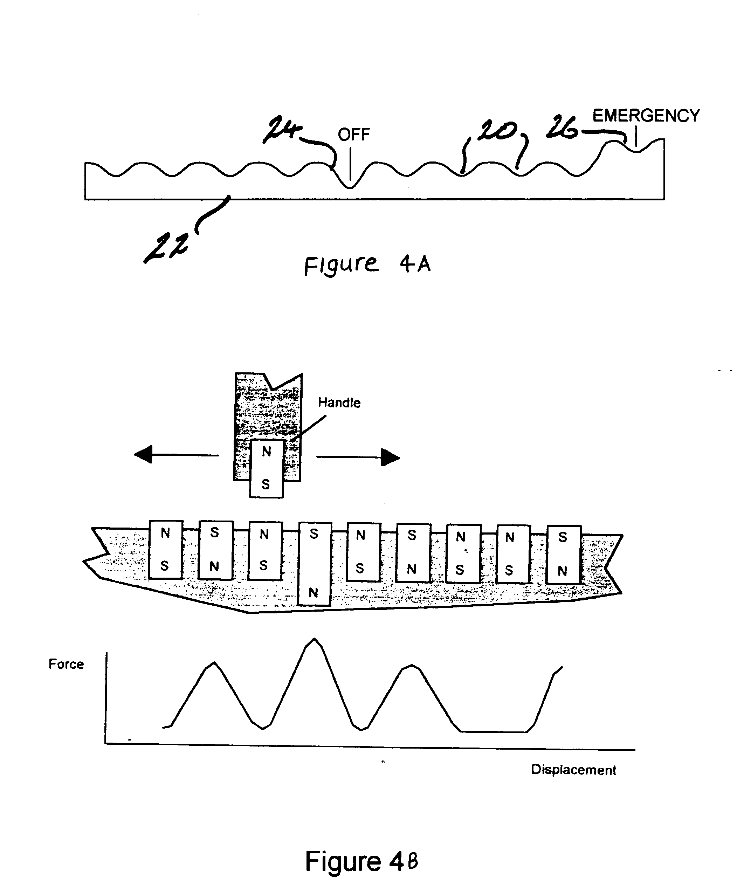

An embodiment provides a profiled indent system shown in Figure 4A. This includes a sprung ball bearing (not shown) provided on the handle 14 in conventional manner. The sprung ball co-operates with a profile of indents 20, shown in Figure 3, which are formed in a suitable elongate member 22. The indents 20 are intended to correspond to operating positions into which the handle 14 can be moved.

As will be apparent from Figure 4A, each indent 20 has relatively shallow walls to facilitate movement of the sprung ball from one indent to another. One indent 24, representative of an "off" position of the system has a deeper indent with steeper walls to provide a different feel to the other indents 20.

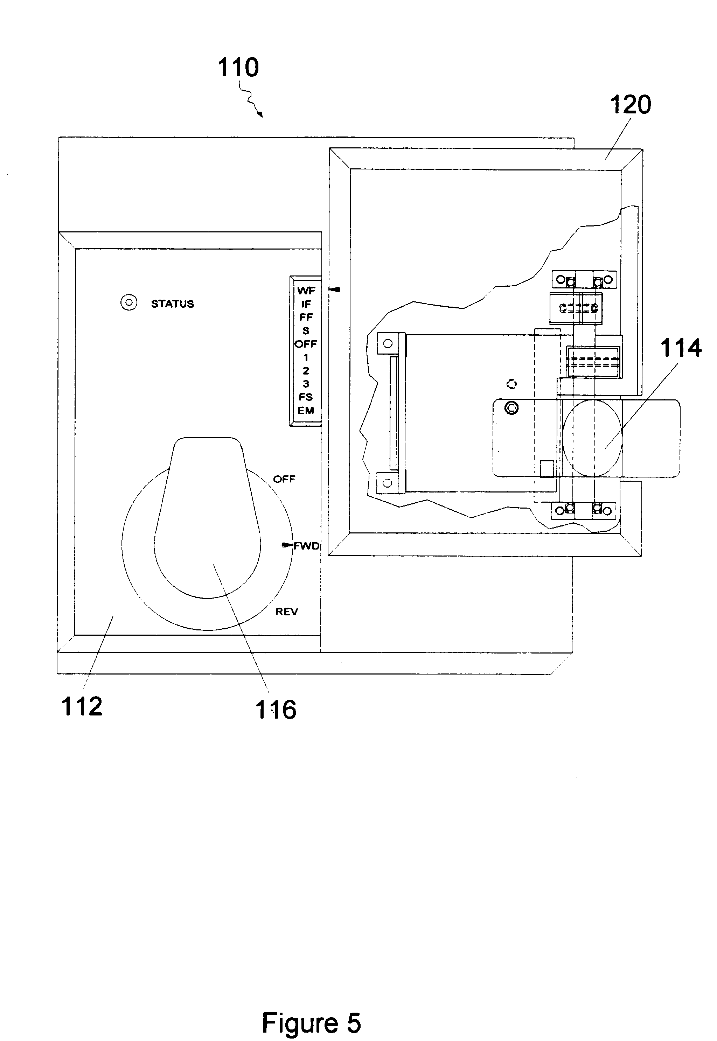

For the application shown in Figures 5 to 7, either side of the "off" indent 24, there is provided a series of similar indents, those to the left when viewed as in Figure 3 being representative of a plurality of drive positions. The indents 20 to the right of the "off" indent 24 are representative of a plurality of braking states of the system, with an "emergency" indent 26 at the far end of the series at a position of the handle 14 which provides emergency braking. As will be apparent from Figure 4A, this "emergency" indent 26 would require more compression of the sprung ball and is thereby harder to move into. This prevents inadvertent movement of the handle into this position.

The profile indent system provides a tactile feel for the operator and ensures that a chosen handle position has been properly reached. The resistance to movement of the handle 14 is preferably chosen in dependence upon customer requirements. A useful test has been to provide resistance sufficient to prevent movement of a linearly slidable handle 14 (Figure 2B) when the handle assembly 10 is placed at a 30° angle from the horizontal.

Although the indent profile 20 is shown as being linear, for use with the linearly slidable handle of Figure 2B, it can be readily profiled for any movement of handle. For example, it may be of annular form in the case of a rotatable handle.

An alternative detent system shown in Figure 4B uses magnets arranged such that a magnet on the moving handle assembly passes close to fixed magnets on the controller chassis. By arranging the direction of the magnetic fields and the position, size and power of the magnets a detent 'feel' can be arranged which utilises no contacting or wearing parts whatsoever. The feel derives from the alternate attraction and repulsion of the moving magnet as it passes over the fixed magnets. A graph of Force Vs Position for this magnetic detent would in fact be very similar to that for the mechanical implementation.

Figures 5 to 7 show a preferred embodiment of vehicle control handle assembly 110 which incorporates a Deadman's handle feature.

The assembly includes a housing 112 and a slidable control member 120. Provided on the control housing 112 is a master control knob 116 movable between an OFF position, a forward (FWD) position and a reverse (REV) position. The slidable control member 120 can be slid between one of a plurality of drive modes, through an OFF position to a plurality of braking positions. A last breaking position (EM) provides emergency braking.

As will be apparent, the profiled indent system of Figure 4A or the magnetic system of Figure 4B would be used in the sliding member 120 to provide distinct slider positions.

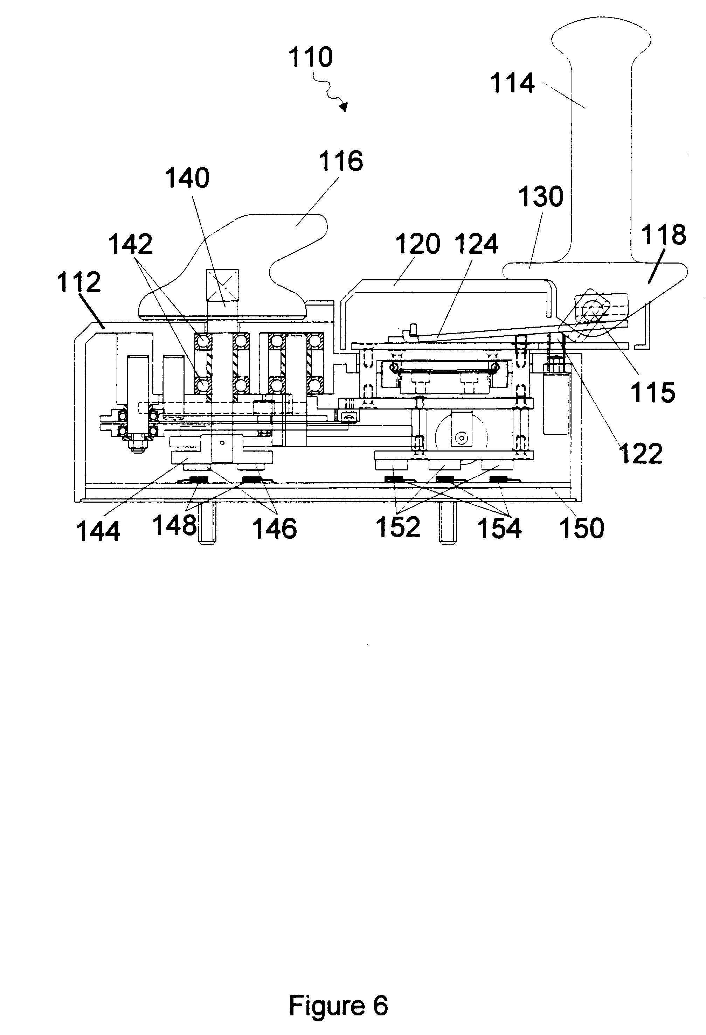

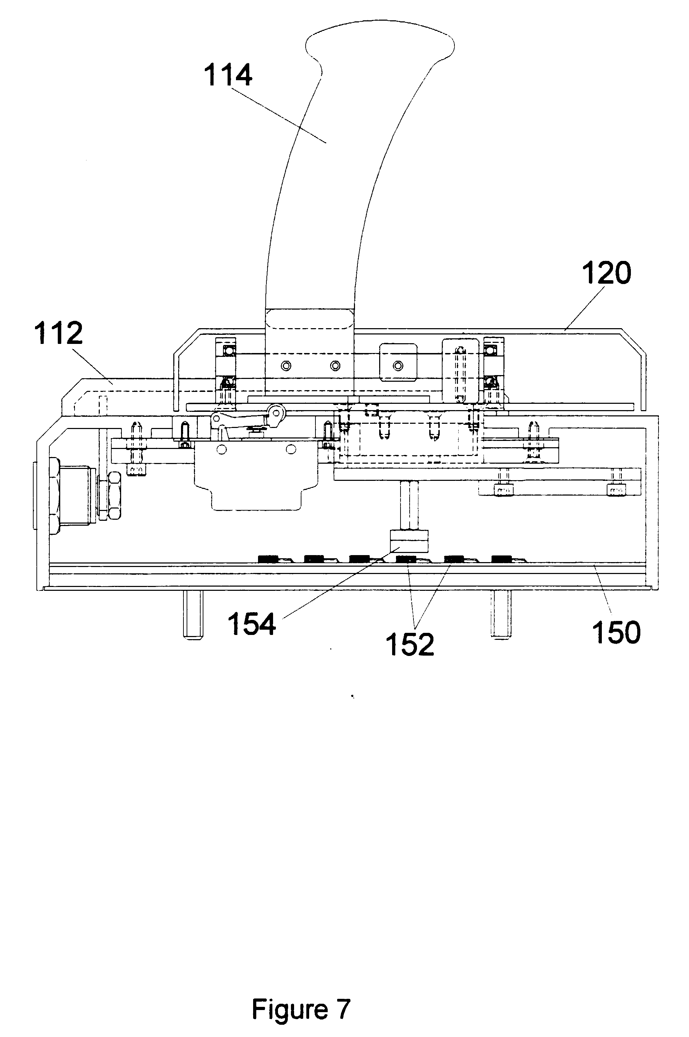

The slidable member 120 is provided with a handle 114, better seen in Figures 6 and 7. The handle 114 is used both to slide the member 120 between its various positions and to check driver awareness.

In the preferred arrangement, the master control knob 116 is a standard rotary arrangement with a positive "click" feel at each position and requiring a reasonable force to turn. This requirement stems from a perceived need for the handle to be solid and chunky rather than being an electrical or mechanical requirement.

The slidable member 120 is preferably linear with a free movement. The freedom of movement is modified by the presence of 'click' stops at each position provided by a profiled indent system of Figure 4A or magnetic system of Figure 4B. These stops do not halt the movement, rather they provide an indication to the operator that he/she has reached one of the ten positions. Two of the positions, however, have a different 'feel' as explained above

In the application described herein, it is conventional to have a key to prevent unauthorised use of the system. In this embodiment, the handle 116 and slider 120 are interlocked with each other and with the key. The interlocking used is as follows:
1) When the key is removed or in the OFF position, both the master control knob 116 and the slidable member 120 are locked in their OFF positions. It should not be possible to return the key to the OFF position unless both the knob 116 and the slidable member 120 are in their OFF positions. The key should not be removable unless it is in the OFF position.
2) When the key is rotated to its ON position, both the knob 116 and the member 120 are free to move. This allows BIT of the sensors (as described above). Only when the master control knob 116 is in the Forward or Reverse position is the slidable member 120 free to move. When the slidable member 120 is in any position other than its OFF position, it should not be possible to move the master control knob 116.

As can be seen in Figure 6, the handle 114 is secured to a pivot 115 and includes a weight 118 at an outer side of the handle 114 such that with no restraining force being applied to the handle 114, it will pivot from the position shown in Figure 6 to a lower non-operating position. Coupled to the handle 114 is a switch contact 122 which is only in contact with a second switch contact 124, so as to close the switch, when the handle 114 is in the upright position. In the lower position of the handle 114, the switch 122, 124 is open circuited.

At a side of the handle 114 opposite the weight 118, there is provided a rest plate 130 onto which an operator can place a hand so as to keep the handle in the upright position. This plate 130 is optional and may be omitted when it is desired to ensure that the handle 114 remains in the upright position only when it is properly held by the operator.

However, the plate 130 can significantly reduce operator fatigue and, if necessary, can be used with other alertness tests, as will be described below, to test driver alertness.

The design of the handle 114 is such that not much force is required to keep it in the upright position. In fact, the weight 118 need only provide a small biasing force to begin pivoting of the handle 114 when it is released by the operator.

The position of the handle 114 determines whether or not the system driven by the control handle assembly 110 is to be operated or not. More specifically, when the handle 114 is in the upright position to close the switch 122, 124, the assembly provides a control signal to the effect that the system being controlled should function in accordance with the position indicated by the slidable member 120. On the other hand, when the handle 114 is in its lower position and the switch 122, 124 is open circuited, the control signal produced is one to the effect that operator has lost alertness and that the system controlled should therefore be stopped. In this example, the brakes are applied once the handle 114 has dropped to its lower position for four seconds.

In the preferred embodiment, which includes the rest plate 130, the control system is preferably provided with a check mechanism which requires the operator to move the handle to its lower position for a predetermined time at regular intervals. For example the operator may be required to move the handle 114 to its lower position for a couple of seconds every half minute or so. Failure to move the handle in the required manner would result in closing down of the system. Any suitable check of this type could be used.

More specifically, in the preferred embodiment, the system generates a periodic audible or visual signal which requires acknowledgement by the operator moving the handle 114 away from its normal operating position and returning to the normal operating position within a predetermined period of time. Otherwise a safe shut down is operated by the system, which generates the control signals for braking and/or produces warnings or alerts. This feature could be considered as a vigilance system.

Also shown in Figures 6 and 7 is the arrangement of magnets and sensors. In this embodiment, the magnetic sensing system is used for both the master control switch 116 and the slidable member 120.

The master control switch 116 is fitted to a shaft 140 held in a bearing assembly 142 to enable the switch 116 to rotate. At the other end of the shaft 140 there is provided a carrier plate 144 in which are located, in recesses thereof, three magnets 146 (only two of which are shown in Figure 6). The magnets are equally spaced form one another and coact with a series of semiconductor sensors 148 annularly disposed on a printed circuit board 150 or other suitable support. In this embodiment, although the magnets 146 coact with the same series of sensors, they do so with different sensors in the series 148 and thus provide separate sensor signals which can be compared to one another.

The operator's handle slider 120 is provided with three magnets 152 in series and equally spaced from one another. As will be apparent, these magnets move with the slider mechanism. The printed circuit board 150 includes three separate series of sensors 154 which extend substantially along the length of travel of the slider 120 so as to be able to indicate the position of the slider relative to the operating positions shown in Figure 5.

In the preferred embodiment, the controller 100 also has the facility to detect the absolute position of the handle 114 and output this as either a voltage or a Pulse Width Modulated (PWM) signal proportional to the displacement of the handle 114 from a fixed datum. (e.g. the OFF or NEUTRAL position.)

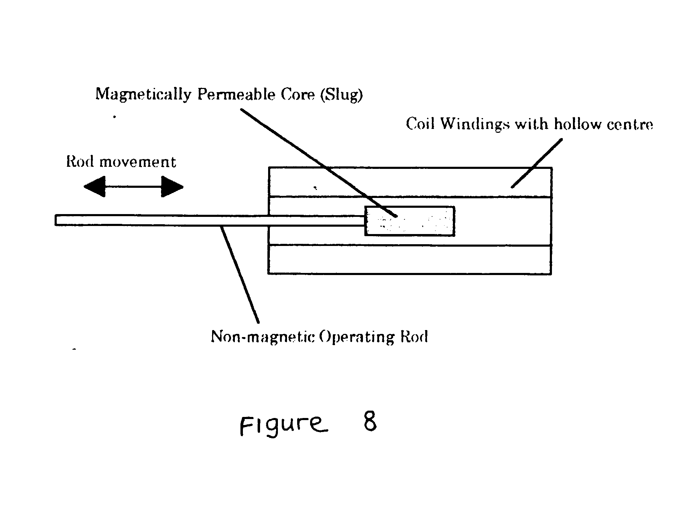

This is achieved by the use of a standard electronic component called a linearly variable differential transformer (LDVT), shown in Figure 8. This device operates by detecting the influence of a magnetically permeable core on the currents flowing through its various electrical coils. The amount of influence depends on the relative position of the core and coils. A standard integrated circuit converts the coil currents to a voltage proportional to the displacement of the core from a datum point.

The advantage of using this sensor is that the core does not come into contact with the coils and therefore is a non-wearing component. The core of the LVDT is connected to the mechanism of the controller by a light, non-magnetic rod. The body of the LVDT is rigidly fixed to the chassis of the controller. This magnetic non-contact technique is an extension of the sensors used to detect discrete handle position.

In an alternative embodiment, the position of the driver's handle is detected by use of a capacitive or photoelectric absolute shaft encoder. Absolute shaft encoders are well known in the art so details of this design are not specified herein. The preferred embodiment uses an encoder sold by the company Hengstler. The shaft of the encoder is linked to the driver's handle by a suitable means e.g. gears. The linkage is arranged such that the encoder shaft does not rotate by more than 380 degrees.

The digital output from the encoder is interpreted by electronic devices in the controller.

Analogue position indication is possible since the rotational resolution of the encoder is very high and the 'stepped' nature of the output will not be discernable by other devices using the controllers output. The positional information given by the encoder is converted into a suitable analogue output signal type such as pulse width modulated (PWM) signal or an analogue voltage.

Discrete positioning can be detected by checking for a contiguous set of digital output values. For example if the digital output represented a 200mm stroke by the numbers 1 to 2000, then detection of the numbers 100 to 120 would indicate that the handle was at a point in the stroke between 10 and 12 mm away from the datum. This is accurate enough to be considered a discrete point along the stroke.

The disclosures in Britain patent application no: 9513296.5, from which this application claims priority, and in the abstract accompanying this application are incorporated herein by reference

## Claims

1. A control handle assembly comprising a handle (114) movable between at least first and second positions, position sensing means (122, 124) for sensing the position of the handle, control means for providing an actuating output when the handle is in the first position, wherein the handle is movable to the second position by means of gravity in the absence of a holding force applied thereto.

2. A control handle assembly according to claim 1, wherein the handle is pivotable between the first and second positions and includes a weight (118) disposed so as to cause it to pivot to the second position in the absence of a biasing force.

3. A control handle assembly according to claim 1 or 2, wherein the handle is provided with a rest member (130) onto which an operator can rest a hand, the rest member being coupled to the handle so as to cause the handle to be in its first position when an operator's hand is resting on the rest member.

4. A control handle assembly according to any preceding claim, wherein the control means is operative to require movement of the handle (114) so as to retain the output in the actuating state.

5. A control handle assembly according to claim 4, wherein the control means is operative to set the output in an inactive state if the handle (114) has not been moved to the second position for a predetermined time period.

6. A control unit including a control handle assembly according to any preceding claim; at least one movable actuator (116, 114) for setting a device to be controlled into one of a plurality of operating states and magnetic actuator sensing means (146; 152, 154) for sensing the position of the or each actuator.

7. A control unit according to claim 6, wherein the magnetic actuator means includes at least one magnet (146; 154) fitted to the or at least one of the movable actuators and a magnetic field sensor (154) disposed so as to sense the or each magnet.

8. A control unit according to claim 6 or 7, wherein a damping or detent mechanism (22) is provided for the or each actuator.

9. A control unit according to any one of claims 6 to 8, wherein the handle is provided on the or an actuator.

10. A control unit according to any one of claims 6 to 9, wherein the control unit includes processing means including three processing channels (A,B,C) coupled to three separate actuator position sensing means coupled to the or each actuator, the processing means (100) being operative to generate a control output when signals from at least two of the actuator position sensing means correspond to one another.

11. A control unit according to claim 10, wherein the processing means is asynchronous and/or non-sequential.
